# EUROPEAN PATENT APPLICATION

(11) **EP 1 578 154 A1**
(43) Date of publication of application: **21.09.2005**
(21) Application number: 03786357.8
(22) Date of filing: 26.12.2003
(51) Int. Cl.: H04Q 7/32

(54) **INFORMATION PROCESSING APPARATUS, DEVICES THEREOF, AND COMMUNICATION DEVICE**

(30) Priority: 27.12.2002 JP 2002382633
(71) Applicant: MATSUSHITA ELECTRIC INDUSTRIAL CO., LTD., Osaka 571-8501 (JP)
(72) Inventor: KAWAGUCHI, Kyoko, Setagaya-ku, Tokyo 156-0057 (JP); KIKUCHI, Takafumi, Oota-ku, Tokyo 144-0046 (JP); TAKAGI, Yoshihiko, Oota-ku, Tokyo 144-0046 (JP); MINEMURA, Atsushi, Itabashi-ku, Tokyo 173-0031 (JP)
(74) Representative: Hössle Kudlek & Partner
(86) International application number: PCT/JP2003/016929
(87) International publication number: WO 2004/062307

(57) **Abstract**

An information processing apparatus is disclosed capable of using application programs of both a cellular phone and a non-contact card type terminal in cooperation, and performing a process request with respect to a portable terminal in response to a command received by the non-contact card type terminal from a communication terminal. When a communication terminal 30 requests a second device (SE: non-contact card type terminal) 20 of an information processing apparatus (hybrid portable communication terminal) 70 to process data in response to a predetermined command in a predetermined non-contact communication system, a command transmission request is transmitted beforehand with respect to a first device (PTD: cellular phone) 10 of the information processing apparatus in another non-contact communication system. When a predetermined command is transmitted to the second device from the first device, and a command is transmitted to the second device from the communication terminal, the second device executes a process with respect to the command, and predetermined data processing can be requested to the first device.

## Description

### Technical Field

The present invention relates to an information processing apparatus and the like, particularly to an information processing apparatus in which communication functions by different types of protocols are combined, and two types of devices and a communication device which are constituting elements.

### Background Art

Cellular phones of a so-called cellular phone system have prevailed, accordingly various application programs have been mounted on personal portable terminals such as cellular phones, and it has been possible to access a desired server via internet. On the other hand, a non-contact card type terminal on which a coil antenna and an IC are mounted has been put to practical use, and has been actually used as a train prepaid card or the like (see, e.g., Patent Document 1 described below). As a communication system of a non-contact type IC card, for example, ISO14443-B or the like is known.

The cellular phone or the personal portable terminal called PDA is connected to the internet to acquire various kinds of information, and thus the use range is remarkably broad. On the other hand, in the non-contact card type terminal, which is called a secure card or the like, balance information is stored under high security guarantee, and therefore the reliability is high. A cellular phone combined with the non-contact card type terminal has been developed in such a manner as to communicate with a card reader/writer (local server which is a communication target of the non-contact card type terminal) with which the cellular phone cannot directly communicate via a communication function of the non-contact card type terminal (see Patent Document 2 described below).

Patent Document 1: Japanese Patent Application Laid-Open No. 2000-172806 (FIG. 3, paragraphs 0002 to 0004)

Patent Document 2: Japanese Patent Application Laid-Open No. 2000-341763 (FIGS. 1, 2, abstract)

However, a radio communication system disclosed in Patent Document 2 merely performs communication between the cellular phone and the card reader/writer via the non-contact card type terminal. That is, in the radio communication system of Patent Document 2, the non-contact card type terminal itself is not used in communication with the card reader/writer regardless of the cellular phone, and, as a result, the card reader/writer is not capable of communicating in order to utilize a function (e.g., a prepaid card function, etc.) inherent in the non-contact card type terminal.

When the communication with the card reader/writer (local server) is performed using a hybrid portable communication terminal described in the above-described prior application, a command signal can be transmitted to a non-contact card type terminal side of the hybrid portable communication terminal, but the non-contact card type terminal cannot transmit any command signal because of standards of an IC card. That is, on receiving a command from the card reader/writer, the non-contact card type terminal can return a response, but the terminal itself cannot emit any command to the cellular phone which is another constituting element of the hybrid portable communication terminal. Therefore, the cellular phone (portable terminal) constituting the hybrid portable communication terminal is organically brought into cooperation with an application program of the non-contact card type terminal (secure card terminal), an operation section of the hybrid portable communication terminal is operated for timely data processing or data display, and a command has to be sent to the non-contact card type terminal.

### Disclosure of the Invention

Therefore, an object of the present invention is to provide an information processing apparatus capable of using application programs of both a cellular phone and a non-contact card type terminal in cooperation, communicating with a communication terminal with a desired protocol using an application program required in accordance with application, and requiring a process with respect to a portable terminal in response to a command received by the non-contact card type terminal from the communication terminal, and to provide two types of devices and a communication device which are constituting elements.

To achieve the above-described problem, in the present invention, non-contact communication is performed with an application program of a cellular phone or the like by a hybrid portable communication terminal which is an information processing apparatus combined with terminals of different communication systems in a predetermined non-contact communication system with a communication terminal in a point-blank range. Accordingly, an application program for performing various data processes is used in cooperation. If necessary, these application programs can be selectively used. Communication means of another non-contact communication system different from the predetermined non-contact communication system are mounted on both the hybrid portable communication terminal and the communication terminal, and the communication terminal requests a non-contact card type terminal or the like which is a second device of the hybrid portable communication terminal to process data in response to a predetermined command in the predetermined non-contact communication system. In this case, a command transmission request is transmitted to a cellular phone which is a first device of the hybrid portable communication terminal in another non-contact communication system beforehand. When a predetermined command is transmitted to the second device from the first device, and a command is transmitted to the first device from the second device, the second device executes a process in response to the command, and predetermined data processing can be requested to the first device.

That is, according to the present invention described in claim 1, an information processing apparatus comprising: a first device; and a second device connected to the first device in an attachable/detachable or fixed manner,
the first device comprising:
first communication means for communicating with fifth communication means of an external communication device;
second communication means for communicating with the second device; and
a first control section for controlling processing in the first communication means, the second communication means, and the first device,
the second device comprising:
   third communication means for communicating with the second communication means;
   fourth communication means for communicating with sixth communication means of the communication device or a communication device which is different from the communication device; and
   a second control section for controlling processing in the third communication means, the fourth communication means, and the second device.

According to this constitution, application programs of the first and second devices can be appropriately combined, or selected to perform a desired process at a high speed. Moreover, even if a user does not operate details, a predetermined command can be automatically transmitted to the first device from the second device to perform predetermined data processing or display.

Moreover, according to the present invention described in claim 2, there is provided the information processing apparatus described in claim 1, wherein on receiving a third process command from the first communication means, the first control section sends the third process command or a command corresponding to the process command to the third communication means via the second communication means,
the second control section once holds a response to the command received via the third communication means [①], processes a first process request received via the fourth communication means, and sends a second process request which is the held response to the second communication means via the third communication means in a case where a new process is required in processing the first process request [②], and
the first control section processes the second process request received via the second communication means, and sends the process response to the third communication means via the second communication means.

According to this constitution, a process of performing authentication can be automatically interlocked, for example, by PIN input or the like. It is to be noted that, needless to say, the present invention also includes a case where generation of a new process in the processing of the first process request (the above ②) is earlier than a holding state, that is, temporary holding of the response by the reception of the third process command (the above ①). Needless to say, as the process in this case, the state of ② is held, and the second process request is sent in a stage in which the state of ① is obtained.

Moreover, according to the present invention described in claim 3, there is provided the information processing apparatus described in claim 1, wherein the first device comprises output means for outputting information,
on receiving a third process command from the first communication means, the first control section sends the third process command or a command corresponding to the process command to the third communication means via the second communication means,
the second control section once holds a response to a command received via the third communication means [①], processes the first process request received via the fourth communication means, and sends information produced [②] as a result of the processing of the first process request as the held response to the second communication means via the third communication means, and
the first control section sends the information received via the second communication means to the output means.

According to this constitution, it is possible to automatically supply a predetermined process result to a user by image, sound, printing output and the like (it is to be noted that ①② are similar to those of the invention described in claim 2).

Furthermore, according to the present invention described in claim 4, there is provided the information processing apparatus described in claim 1, wherein the first device comprises output means for outputting information,
on receiving a third process command from the first communication means, the first control section sends the third process command or a command corresponding to the process command to the third communication means via the second communication means,
the second control section once holds a response to the command received via the third communication means [①], processes a first process request received via the fourth communication means, and sends additional information added to the first process request as the held response to the second communication means via the third communication means, when the processing of the first process request is completed [②], and
the first control section sends the additional information received via the second communication means to the output means.

According to this constitution, it is possible to output even the additional information. Here, the above-described invention, needless to say, includes a case where the additional information is acquired from a communication target via the fourth communication means after the process is completed, when the additional information is not added to the first process request (it is to be noted that ①② are similar to those of the invention described in claim 2).

Additionally, according to the present invention described in claim 5, there is provided the information processing apparatus described in claim 1, wherein the first communication means performs communication in a communication system which does not have any directivity, and
the fourth communication means performs communication in a communication system having the directivity or by a point-blank range.

According to this constitution, presence of the directivity can be skillfully combined to give/receive desired information.

Moreover, according to the present invention described in claim 6, there is provided an information processing apparatus comprising: a first device; and a second device connected to the first device in an attachable/detachable or fixed manner,
the first device comprising:
a communication section which communicates with an external communication terminal;
first communication means for detecting the communication of the communication section;
second communication means for communicating with the second device; and
a first control section which performs the communication section, the first communication means, the second communication means, and control of a process in the first device,
the second device comprising:
   third communication means for communicating with the second communication means;
   fourth communication means for communicating with the communication terminal via the communication section; and
   a second control section which performs the third communication means, the fourth communication means, and control of a process in the second device.

According to this constitution, application programs of the first and second devices can be appropriately combined, or selected to perform a desired process at a high speed. Moreover, even if a user does not operate details, a predetermined command can be automatically transmitted to the first device from the second device to perform predetermined data processing or display.

Moreover, according to the present invention described in claim 7, there is provided the information processing apparatus described in claim 6, wherein in the first device, the communication section receives a first process request from the communication terminal,
the first communication means detects the reception, and the first control section sends a third process command to the third communication means via the second communication means,
in the second device, the second control section once holds a response to the third process command received via the third communication means [①],
the fourth communication means receives the first process request via the communication section,
the second control section processes the first process request received via the fourth communication means, and sends a second process request which is the held response to the second communication means via the third communication means in a case where a new process is required in processing the first process request [②], and
the first control section processes the second process request received via the second communication means, and sends the process response to the third communication means via the second communication means.

According to this constitution, authentication can be performed, for example, by PIN input or the like (it is to be noted that ①② are similar to those of the invention described in claim 2).

Moreover, according to the present invention described in claim 8, there is provided the information processing apparatus described in claim 6, wherein the first device comprises output means for outputting information,
in the first device, the communication section receives the first process request from the communication terminal,
the first communication means detects the reception, and the first control section sends a third process command to the third communication means via the second communication means,
in the second device, the second control section once holds a response to the third process command received via the third communication means [①],
the fourth communication means receives the first process request via the communication section,
the second control section processes the first process request received via the fourth communication means, and sends information produced [②] as a result of the processing of the first process request as the held response to the second communication means via the third communication means, and
the first control section sends the information received via the second communication means to the output means.

According to this constitution, it is possible to supply a predetermined process result to a user by image, sound, printing output and the like (it is to be noted that ①② are similar to those of the invention described in claim 2).

Furthermore, according to the present invention described in claim 9, there is provided the information processing apparatus described in claim 6, wherein the first device comprises output means for outputting information,
in the first device, the communication section receives a first process request from a communication terminal,
the first communication means detects the reception, and the first control section sends the third process command to the third communication means via the second communication means,
in the second device, the second control section once holds a response to the third process command received via the third communication means [①],
the fourth communication means receives the first process request via the communication section,
the second control section processes the first process request received via the fourth communication means, and sends additional information added to the first process request as the held response to the second communication means via the third communication means, when the processing of the first process request is completed [②], and
the first control section sends the additional information received via the second communication means to the output means.

According to this constitution, it is possible to output even the additional information (it is to be noted that ①② are similar to those of the invention described in claim 2, and acquisition of the additional information is similar to that of the invention described in claim 4).

Additionally, according to the present invention described in claim 10, there is provided the information processing apparatus described in claim 6, wherein the fourth communication means performs communication in a communication system having directivity or by a point-blank range.

According to this constitution, presence of the directivity can be skillfully combined to give/receive desired information.

Moreover, according to the present invention described in claim 11, there is provided the first device described in any one of claims 1 to 10.

According to this constitution, the first device constitutes a part of the above-described information processing apparatus.

Furthermore, according to the present invention described in claim 12, there is provided the second device described in any one of claims 1 to 10.

According to this constitution, the second device constitutes a part of the above-described information processing apparatus.

Additionally, according to the present invention described in claim 13, there is provided a communication device which communicates with the information processing apparatus described in any one of claims 1 to 10, the communication device comprising:
fifth communication means for communicating with first communication means of the information processing apparatus; and
sixth communication means for communicating with fourth communication means of the information processing apparatus,
wherein the sixth communication means sends, to the fourth communication means, a first process request with respect to a second device of the information processing apparatus,
the fifth communication means sends, to the first communication means, a process command with respect to a first device of the information processing apparatus before sending the first process request, and
the process command is a process command to perform a process in cooperation with the processing of the first process request.

According to this constitution, the communication device can realize a mechanism of effective automatic cooperation between the first and second devices in the information processing apparatus.

Moreover, according to the present invention described in claim 14, there is provided a communication device which communicates with an information processing apparatus comprising two or more communication means, the communication device comprising:
fifth communication means for communicating with first communication means of the information processing apparatus; and
sixth communication means for communicating with fourth communication means of the information processing apparatus,
wherein the sixth communication means sends, to the fourth communication means, a first process request with respect to the information processing apparatus, and
the fifth communication means sends, to the first communication means, a process command to perform a process in cooperation with the processing of the first process request before sending the first process request, and a mechanism of effective automatic cooperation between first and second devices in the information processing apparatus can be realized.

It is to be noted that the "process command to perform a process in cooperation with the processing of the first process request" includes the following.
(1) Required information acquisition process
   → process command to perform the process in the processing of the first process request, and
      typical examples include authentication information acquisition at the time of settlement of a large amount of money, prepaid charge process and the like.
(2) Result information output process
   → process command to output a process result after the processing of the first process request, and
      typical examples include a process to issue and/or display an electronic receipt after a settlement process.
(3) Additional information output process
   → process command to be processed after the processing of the first process request,
      this is a process (there may be relevance) which does not necessarily require relevance to a first process, and typical examples include a process to display today's news after a ticket check process or an admission process and the like.

According to this constitution, a part of the above-described information processing apparatus is constituted by the communication device.

### Brief Description of the Drawings

FIG. 1 is a block diagram showing a basic constitution of a mode for carrying out a communication system in which an information processing apparatus of the present invention is used;
FIG. 2 is a block diagram showing the mode for carrying out the communication system in which the information processing apparatus of the present invention is used;
FIG. 3 is a schematic diagram showing a flow of processes in the mode for carrying out the communication system in which the information processing apparatus of the present invention is used;
FIG. 4 is a schematic diagram showing a flow of processes in a case where a settlement process is performed in the mode for carrying out the communication system in which the information processing apparatus of the present invention is used;
FIG. 5 is a schematic diagram showing a flow of processes in a case where information is displayed in the mode for carrying out the communication system in which the information processing apparatus of the present invention is used; and
FIG. 6 is a block diagram showing a mounting example of the mode for carrying out the communication system in which the information processing apparatus of the present invention is used.

### Best Mode for Carrying out the Invention

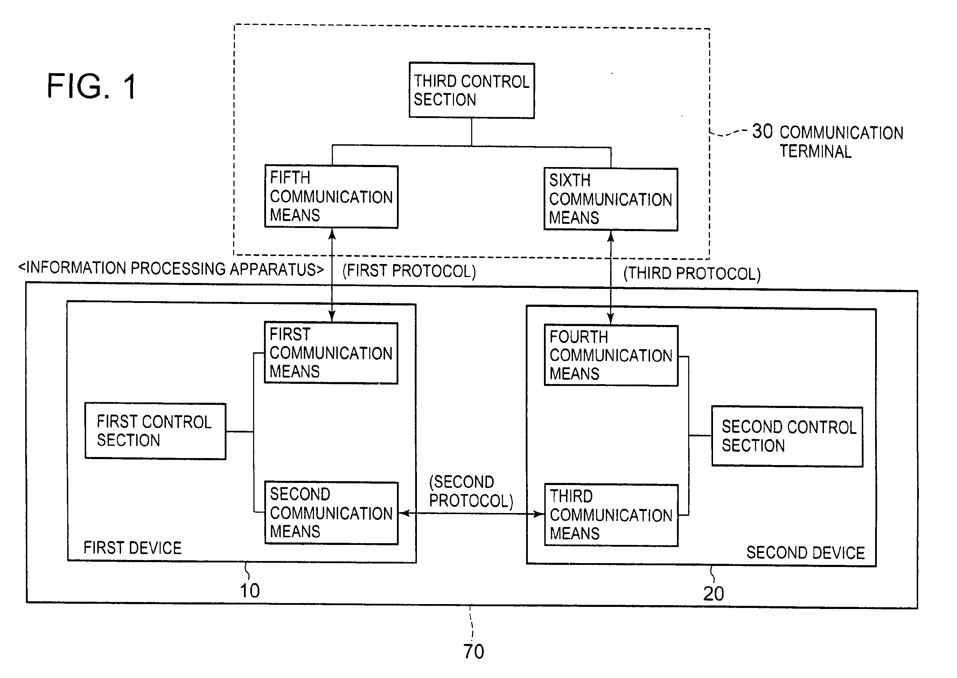

A preferable mode for carrying out an information processing apparatus of the present invention, a device, and a communication device will be described hereinafter with reference to FIGS. 1 to 5.

A basic constitution of the preferable mode for carrying out a communication system in which the information processing apparatus of the present invention is used will be described with respect to FIG. 1. FIG. 1 is a block diagram showing a basic constitution of a mode for carrying out a whole communication system in which the information processing apparatus of the present invention is used. The communication system of the present invention has an information processing apparatus 70 and a communication terminal 30. The information processing apparatus 70 has a first device 10 and a second device 20.

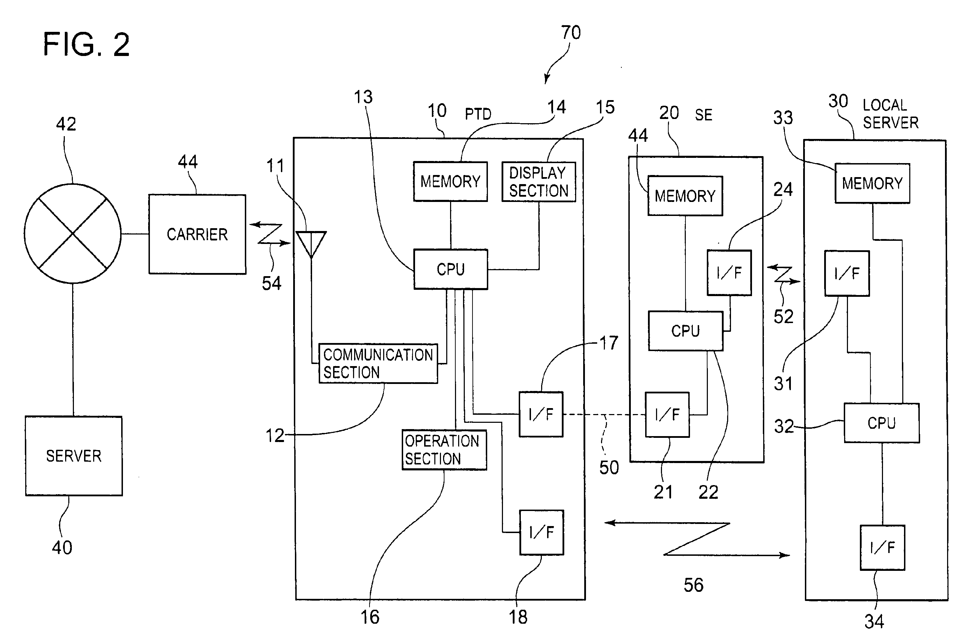

FIG. 2 shows a hardware constitution and a peripheral constitution of the mode for carrying out the communication system of the present invention in which the basic constitution of FIG. 1 is further embodied. In FIG. 2, the communication system of the present invention includes a hybrid portable communication terminal 70 which is an information processing apparatus, and a local server 30 which is a communication terminal. The local server 30 has a function of a non-contact card reader/writer. The hybrid portable communication terminal 70 has a personal trusted device (PTD) 10 corresponding to the first device of FIG. 1, and a secure card terminal (SE) 20 corresponding to the second device of FIG. 1. As the personal trusted device 10, a portable terminal of a known cellular phone system (including a cellular phone and PHS) can be altered and used. As the secure card terminal 20, a so-called non-contact type IC card adopting an electromagnetic induction communication system in a point-blank range can be altered and used. In the present application, the personal trusted device 10 is simply abbreviated as the PTD 10, and the secure card terminal 20 is simply abbreviated as the SE 20.

In FIG. 2, a server 40 is a predetermined information supply source/data processing device connectable to a facility of a carrier 44 whose communication trader is the PTD 10 via internet 42. A constitution from the server 40 to the carrier 44 is an existing system which has heretofore existed, and therefore is not described in detail. The local server 30 in FIG. 2 is an external communication terminal which communicates with the information processing apparatus 70, and adopts the above-described electromagnetic induction communication system in a point-blank range. The local server 30 which is the communication terminal is a terminal which is similar to a non-contact type (or light contact type) communication terminal for an IC card, disposed, for example, in a station ticket gate and which has been modified. In the server, a memory 33 in which program or data is stored, two interface (I/F) 31, 34, and a central processing unit (CPU) 32 which controls these components are disposed. Here, the CPU 32 corresponds to third communication means of FIG. 1, and the memory 33 stores a third application of FIG. 1. The interface 31 corresponds to sixth communication means of FIG. 1, and the interface 34 corresponds to fifth communication means of FIG. 1.

The PTD 10 has an antenna 11 similar to that of a known cellular phone, a communication section 12, a CPU 13, a memory 14, a display section 15, and an operation section 16 in such a manner that basic functions of a normal cellular phone or portable terminal can be executed. The antenna 11, communication section 12, memory 14, display section 15, and operation section 16 are all connected to the CPU 13 (actual connection is performed via a bus line or interface). In this example in which the antenna 11 and communication section 12 are not required in a case where the PTD 10 does not have to execute the basic function of the usual cellular phone or portable terminal, the display section 15 is shown as output means. However, not only display by a screen but also information output means to a user, such as reporting by sound and printing output by a printer, are usable. It is to be noted that a battery is also contained, but is omitted from the drawing. In addition to the constitution of the above-described conventional cellular phone, the PTD 10 has two interfaces (I/F) 17, 18 connected to the CPU 13. The interface 17 communicates with the SE 20. On the other hand, the interface 18 communicates with the local server 30 by communication 56 which does not require directivity (communication can be performed even if there is an obstruction between the communication devices). Main examples include radio communication systems such as Bluetooth and radio LAN. Here, the CPU 13 corresponds to first control means of FIG. 1, and the memory 14 corresponds to the first application of FIG. 1. The interface 17 corresponds to second communication means of FIG. 1, and the interface 18 corresponds to first communication means of FIG. 1. Needless to say, a communication system between the interfaces 18 and 34 may be, for example, communication (e.g., IrDA) requiring directivity, communication (e.g., non-contact type IC card) in a point-blank range and the like as long as any disadvantage is not caused in properties of processes (service contents) to be performed here and a characteristic of the communication system.

The SE 20 has a tamper resist storage region, and has an interface (I/F) 24 containing an antenna and a communication section similar to those of a known non-contact IC card, a CPU 22, and a memory 23 in such a manner as to be capable of executing a basic function of a usual non-contact IC card or the like. The interface 24 and the memory 23 are connected to the CPU 22 (actual connection is performed via a bus line or interface). In addition to the above-described constitution of the conventional non-contact type IC card, the SE 20 has an interface (I/F) 21 connected to the CPU 22. This interface 21 communicates with the PTD 10. Here, the CPU 22 corresponds to second control means of FIG. 1, and the memory 23 stores a second application of FIG. 1. The interface 21 corresponds to third communication means of FIG. 1, and the interface 24 corresponds to fourth communication means of FIG. 1. A conventional secure card is constituted in such a manner as to receive a radio wave from the outside, generate electricity by electromagnetic induction by a coil antenna, and operate in a passive manner. Therefore, in general, the card does not have any battery, but this SE 20 receives a power supply from the PTD 10 by connection (not shown). Therefore, active operation is possible as described later. If necessary, it is also possible to contain a battery in the SE 20. A target with which the interface 24 (fourth communication means) communicates is not limited to the local server 30 (communication terminal) which performs settlement, but may be a device, disposed in the vicinity of entrance to a food corner, to transmit a command for a PIN input process at the time of large-amount settlement. In this case, a command is transmitted to the SE 20 (second device) beforehand from this device. It is to be noted that, in this case, the device does not have to be provided with both the fifth and sixth communication means shown in FIG. 1.

The SE 20 may be disposed not only in a fixed manner but also in an attachable/detachable manner with respect to a casing (not shown) of the PTD 10. The communication between the PTD 10 and the SE 20 is performed by cable communication. Therefore, when the SE 20 is fixed, a communication cable shown by a dotted line 50 is disposed between the interfaces 17 and 21 to thereby perform communication. On the other hand, when the SE 20 is detachably attached, a contact portion of the communication cable 50 is disposed in an attachable/detachable portion, the SE 20 is attached to a casing of the PTD 10, and then the interfaces 17 and 21 can be constituted in such a manner as to be connected to each other.

OSs or application programs for controlling operations of the CPUs 13, 22 are stored in the memory 14 of the PTD 10, and the memory 23 of the SE 20, respectively. In an actual operation, these application programs are started to perform various processes. In FIG. 2, communications are performed between the SE 20 and the local server 30 by a point-blank radio communication wave (electromagnetic induction wave) 52, between the PTD 10 and the local server 30 by the communication 56 which does not require any directivity as in Bluetooth and radio LAN, and between the PTD 10 and the carrier 44 by a cellular phone system radio communication wave 54, respectively. The PTD 10 communicates with the local server 30 via the interfaces 18, 34 by a first protocol. The PTD 10 and the SE 20 communicate with each other via the interfaces 17, 21 by a second protocol. Furthermore, the SE 20 and the local server 30 communicate with each other by a third protocol such as known ISO14443-B. The PTD 10 communicates with the server 40 via the carrier 44 and the internet 42 by the communication section 12 having transmission and reception portions by a predetermined protocol such as known TCP/IP. It is to be noted that an appropriate protocol can be appropriately selected and used as the second protocol from protocols which have heretofore been known. As an example, the protocol defined in ISO7816 may be altered and used.

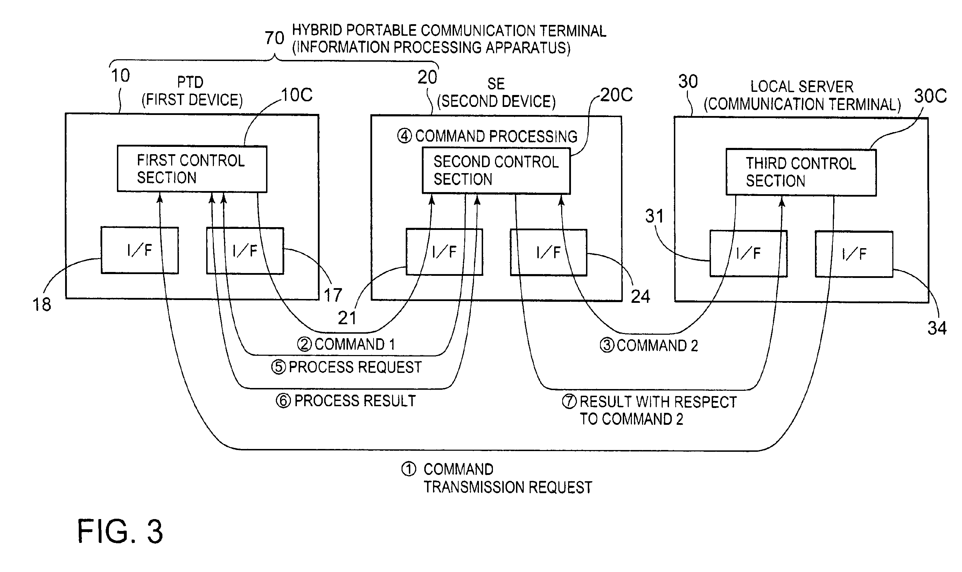

Next, an operation of an embodiment of the present invention, that is, an information processing method in a communication system constituted of a hybrid portable communication terminal 70 which is an information processing apparatus, and a local server 30 will be described with reference to FIG. 3. As a representative example, the communication system of the present invention processes a process request such as a settlement request from a transport facility, charged facility, ticket store, ticket vending machine, electronic money including POS terminal or the like, prepaid card, or settlement terminal for performing electronic settlement of electronic securities. Additionally, needless to say, the present invention is applicable to processes for various services. A flow or processes will be described with reference to FIG. 3 before describing specific process contents.

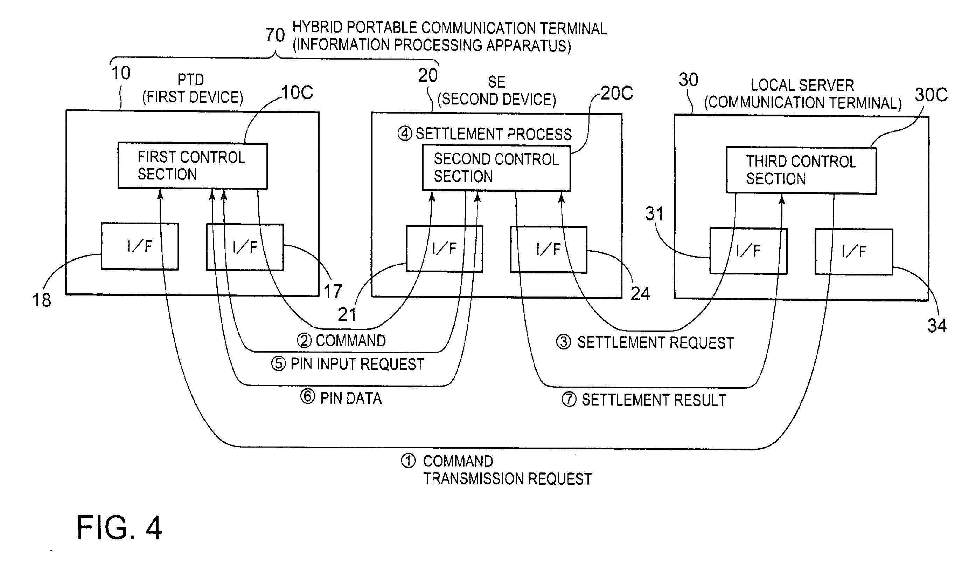

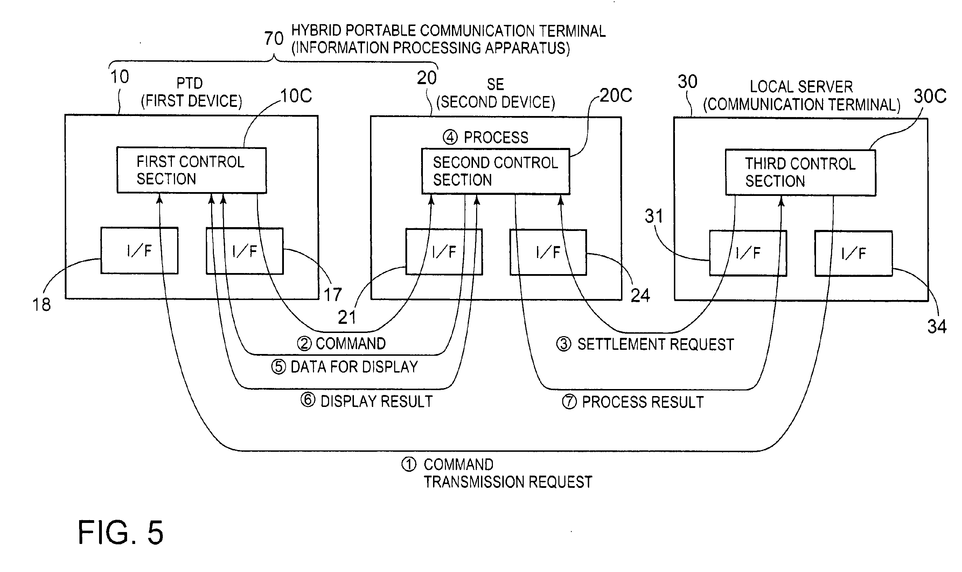

FIG. 3 abstracts and shows the constitution of FIG. 2. The CPU 13 and the memory 14 of the PTD 10 are shown as a first control section 10C, the CPU 22 and the memory 23 of the SE 20 are shown as a second control section 20C, and the CPU 32 and the memory 33 of the local server 30 are shown as a third control section 30C. The interface 18 constitutes first communication means, the interface 17 constitutes second communication means, the interface 21 constitutes third communication means, the interface 24 constitutes fourth communication means, the interface 34 constitutes fifth communication means, and the interface 31 constitutes sixth communication means. This also applies to FIGS. 4 and 5 described later.

First, when the hybrid portable communication terminal 70 is positioned in a short-distance range which is a communication range of the local server 30, ① the third control section 30C of the local server 30 transmits a command transmission request to the first control section 10C of the PTD 10 via the interfaces 34 and 18, requesting the first control section 10C to send a first command to the second control section 20C of the SE 20. ② Next, on receiving the command transmission request, the first control section 10C sends the first command to the second control section 20C of the SE 20 via the interfaces 17 and 21.

③ Thereafter, the third control section 30C of the local server 30 transmits a second command to the second control section 20C of the SE 20 via the interfaces 31 and 24. Then, ④ the second control section 20C executes a process in response to the second command. Thereafter, ⑤ the second control section 20C transmits a process request to the first control section 10C of the PTD 10 via the interfaces 21 and 17, requesting the section to perform a predetermined process. ⑥ The first control section 10C transmits a result of the process performed in response to the process request to the second control section 20C of the SE 20 via the interfaces 17 and 21. ⑦ On receiving the process result, the second control section 20C transmits the process result to the third control section 30C of the local server 30 with respect to the second command via the interfaces 24 and 31, and then a series of communication ends. It is to be noted that the second control section 20C once holds a response to the first command. It is to be noted that when the first command does not come yet via the interface 21, the processing of the process request of the second command is once held until the first command comes. After the first command comes, a response is made. A similar process is also performed with respect to an output of the process result or that of additional information. It is to be noted that the additional information may be acquired from the outside after the process ends.

FIG. 4 is a diagram showing the process of FIG. 3 specifically as a settlement process. Here, the SE 20 is electronic money, and the local server 30 will be described as a POS terminal such as a supermarket. Now it is assumed that an application program of the SE 20 has a settlement function up to 5,000 yen at maximum in one shopping time. It is assumed that the user has the PTD 10 on which the SE 20 is mounted, goes to shopping in the supermarket, and makes settlement in a cash register. Since the local server 30 is disposed in the register, the user brings the PTD 10 including the SE 20 to the vicinity of the interface 31 of the local server 30. Then, the local server 30 ① sends the command transmission request to the PTD 10. ② Next, the PTD 10 sends a command to the SE 20. ③ Furthermore, the local server 30 transmits a settlement request to the SE 20. ④ The settlement request is received via the interface 24, the CPU 22 of the SE 20 reads a predetermined application program from the memory 23 by predetermined analysis to start the program, and the settlement process is executed as follows. When a total shopping amount is up to 5,000 yen, a payment instruction is made by this application program, and a settlement response is made with respect to the local server 30 via the interface 24.

On the other hand, when the shopping total amount exceeds 5,000 yen, the settlement by the application program of the SE 20 is not performed. ⑤ The PTD 10 is requested to input a personal identification number (PIN) via the interfaces 21, 17. Upon receiving this request, the PTD 10 starts the predetermined application program (e.g., i application), and performs predetermined display in the display section 15 in order to inquire the user whether or not the settlement may be performed. To perform this display, the CPU 13 operates to display, for example, "the total shopping amount is 15,800 yen. Since the amount exceeds 5,000 yen, automatic settlement cannot be done. When payment is approved, input your password and press #. If it is not approved, please press 0#."

The user performs input following this instruction. When 0# is pressed in the above-described example, the settlement is not performed, and it is notified to the local server 30 via the SE 20 that the settlement is not performed. Here, the PIN assigned beforehand when the SE 20 is obtained (bought) is used as a password. In the above-described example, when # is pressed following the password, ⑥ the PTD 10 sends a predetermined instruction, that is, PIN data to the SE 20, and the SE 20 authenticates whether or not the received PIN is correct. ⑦ When the PIN is correct, the SE 20 sends, to the local server 30, predetermined notification, that is, notification of settlement information indicating that the settlement is to be performed.

In the above-described example, the PTD 10 starts the application program to obtain approval of payment by the user, but may be constituted in such a manner as to access the server 40 shown in FIG. 2 via the internet 42 and call for the approval.

FIG. 5 is a diagram showing the process of FIG. 3 specifically as information display. Examples of information to be displayed include an electronic receipt at a shopping time, electronic ticket, additional information at an electronic ticket check time, member special data (information, electronic coupon) at electronic member verification and the like. Examples of the member special data include "this-month bargain information" in stores such as a supermarket and a department store, "today's precaution" in a sports club and the like.

First, the hybrid portable communication terminal 70 is positioned in a short-distance range which is a communication range of the local server 30. Then, ① the third control section 30C of the local server 30 transmits a command transmission request to the first control section 10C of the PTD 10 via the interfaces 34 and 18, requesting the first control section 10C to send a first command to the second control section 20C of the SE 20. ② Next, on receiving the command transmission request, the first control section 10C transmits the command to the second control section 20C of the SE 20 via the interfaces 17 and 21.

③ Thereafter, the third control section 30C of the local server 30 transmits the process request to the second control section 20C of the SE 20 via the interfaces 31 and 24, ④ the second control section 20C executes a process in response to the process request, and ⑤ thereafter the second control section 20C transmits data for display to the first control section 10C of the PTD 10 via the interfaces 21 and 17. The first control section 10C performs predetermined display, and ⑥ transmits the display result to the second control section 20C of the SE 20 via the interfaces 17 and 21. ⑦ The second control section 20C sends the data for display to the first control section 10C in the above ⑤. Then, even when the result of the display of the above ⑥ is not received, the process result to execute the process request is transmitted to the third control section 30C of the local server 30 via the interfaces 24 and 31. Then, a series of communication ends. Therefore, the process of the above ⑥ may not be executed.

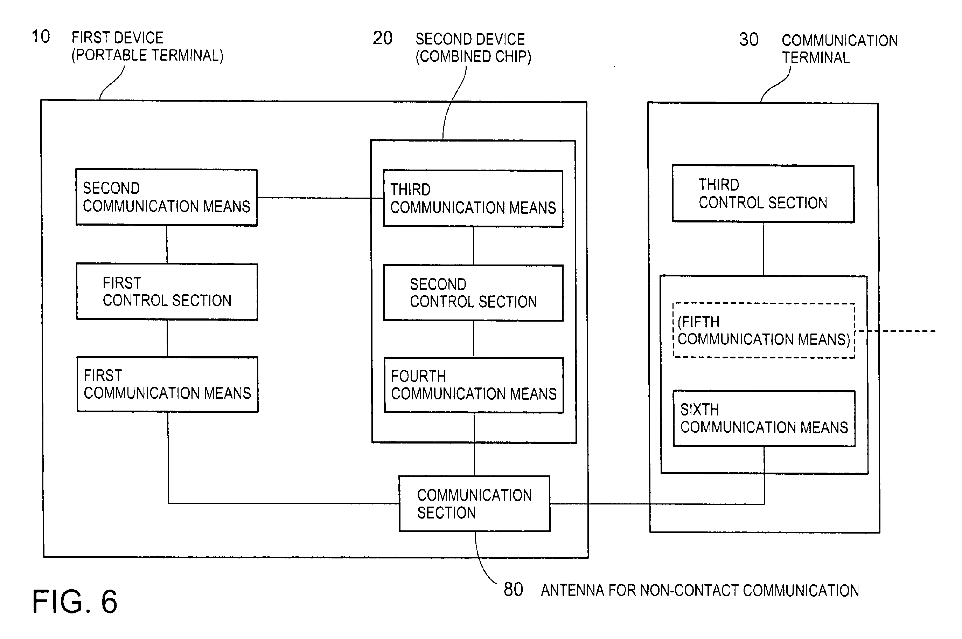

FIG. 6 shows an application example of mounting. The sixth communication means of the communication terminal 30 in FIG. 1 is mounted as a non-contact communication function (function corresponding to fifth communication means is not especially required). A second device 20 is an IC card having a combined function (having third communication means which is a contact IF and fourth communication means which is a non-contact IF). Additionally, an antenna 80 for non-contact communication is not mounted in the second device. The fourth communication means is mounted as a non-contact communication protocol, and the fifth communication means is mounted as a communication function of the contact IC card. A first device 10 is a cellular phone (portable terminal), and the antenna 80 for the non-contact communication is mounted. Second communication means is a contact IC card communication function, and first communication means is the antenna 80 for the non-contact communication, and has a function of detecting whether or not non-contact communication has been performed by the antenna 80 for the non-contact communication.

The mounting example in FIG. 6 is different from a conventional example in a process until "the first device 10 receives a process request from the communication terminal 30, and transmits the request to the second device 20", and the following operation is the same. That is, in the present application example, the first device 10 does not receive any process request from the local server 30, and "when the communication section receives the process request with respect to the second device 20, the first communication means detects the reception, and transmits a process request held beforehand or corresponding to the process request generated at this time to the second device 20."

It is to be noted that the present invention is not limited to the above-described constitution or operation of the embodiment, and may be modified as follows. That is, besides the process by the SE 20 or the PTD 10 shown in FIG. 2, the predetermined server 40 connected to the PTD 10 via the internet 42, or another device connected to the PTD 10 directly, electrically, or via radio waves or the like may perform a process. The process result may be transmitted to the local server 30 which is the communication terminal via the SE 20. It is to be noted that a representative example of the process request from the local server 30 is any of the process requests from a transport facility, charged facility, ticket store, ticket vending machine, electronic money including POS terminal or the like, prepaid card, and settlement terminal for performing electronic settlement of electronic securities. Additionally, needless to say, the present invention is applicable to processes for various services. In a further preferable mode of the present invention, a constitution further comprises a step of receiving additional information by the SE 20 at a communication time with the local server 30. The received additional information is sent to the PTD 10, and supplied to the user by a display under control/administration of the PTD 10.

Moreover, a case where the communication 52 between the fourth communication means (interface 24) and the sixth communication means (interface 31) has non-contact in the IC card or the like has been described, but a communication system requiring directivity of IrDA or the like may be used. Considering a settlement process which has been described as a representative service example, clear intention display (further preferably, an environment where the action is not obstructed) of a person who makes the settlement is required. However, in the IrDA, since the directivity is required, an intention display (further a situation which is not easily obstructed because a communication distance is about 1 m to several tens of centimeters in a short-distance or point-blank range) to direct the apparatus to the settlement terminal is required.

Moreover, in a preferable mode of the present invention, a constitution further comprises a step of receiving an electronic receipt by the SE 20 after ending a predetermined settlement in the communication with the local server 30, and the received electronic receipt is sent to the PTD 10, and supplied to the user by the display brought under the control/administration of the PTD 10.

Furthermore, in a preferable mode of the present invention, the local server 30 which is the communication terminal is a personal computer, and the constitution further comprises a step of receiving personal information manager (PIM) information by the SE 20 at a communication time with the personal computer. The received PIM information is sent to the PTD 10, and supplied to the user by the display brought under the control/administration of the PTD 10.

Additionally, in a preferable mode of the present invention, the communication terminal is not the local server, and is a household electric appliance. The constitution further comprises: a step of receiving control information of the household electric appliance by the SE 20 at a communication time with respect to the household electric appliance; and a step of transmitting a control command to control the household electric appliance with respect to the household electric appliance. The received control information is sent to the PTD 10, and supplied to the user by the display brought under the control/administration of the PTD 10. Moreover, the predetermined control command is transmitted to the household electric appliance in accordance with an instruction given by the user.

As a method of supplying information to the user, not only the displaying of characters or images but also the supplying of the information by sound, and combination of the sound and display are preferable modes of the present invention.

### Industrial Applicability

As apparent from the above description, according to the present invention, by a hybrid portable communication terminal in which terminals of different communication systems are combined, an application program of a cellular phone or the like, and an application program for performing non-contact communication with a communication terminal in a point-blank range to perform various data processing are used in cooperation. If necessary, these application programs can be selectively used. Therefore, in an environment having high security, high-speed giving/receiving of a data process, or data processing is possible, and non-efficiency or complication of an operation can be solved in a case where a conventional portable terminal, non-contact type IC card or the like is used alone, or used simply as a combination. Furthermore, the communication terminal requests a non-contact card type terminal of a hybrid portable communication terminal to process data in response to a predetermined command in a first non-contact communication system. At this time, a command transmission request is transmitted beforehand to a contact card reader/writer of the hybrid portable communication terminal in a second non-contact communication system. The contact card reader/writer transmits a predetermined command to the non-contact type terminal. When the non-contact card reader/writer transmits a command to the non-contact card type terminal, the non-contact card type terminal executes a process with respect to the command, so that a predetermined data process can be required with respect to the contact card reader/writer. Therefore, a superior effect is produced that an operation section of the hybrid portable communication terminal may not be operated to send a command to the non-contact card type terminal.

## Claims

1. An information processing apparatus comprising: a first device; and a second device connected to the first device in an attachable/detachable or fixed manner,
the first device comprising:
first communication means for communicating with fifth communication means of an external communication device;
second communication means for communicating with the second device; and
a first control section for controlling processing in the first communication means, the second communication means, and the first device,
the second device comprising:
third communication means for communicating with the second communication means;
fourth communication means for communicating with sixth communication means of the communication device or a communication device which is different from the communication device; and
a second control section for controlling processing in the third communication means, the fourth communication means, and the second device.

2. The information processing apparatus according to claim 1, wherein on receiving a third process command from the first communication means, the first control section sends the third process command or a command corresponding to the process command to the third communication means via the second communication means,
the second control section once holds a response to the command received via the third communication means, processes a first process request received via the fourth communication means, and sends a second process request which is the held response to the second communication means via the third communication means in a case where a new process is required in processing the first process request, and
the first control section processes the second process request received via the second communication means, and sends the process response to the third communication means via the second communication means.

3. The information processing apparatus according to claim 1, wherein the first device comprises output means for outputting information,
on receiving a third process command from the first communication means, the first control section sends the third process command or a command corresponding to the process command to the third communication means via the second communication means,
the second control section once holds a response to a command received via the third communication means, processes the first process request received via the fourth communication means, and sends information produced as a result of the processing of the first process request as the held response to the second communication means via the third communication means, and
the first control section sends the information received via the second communication means to the output means.

4. The information processing apparatus according to claim 1, wherein the first device comprises output means for outputting information,
on receiving a third process command from the first communication means, the first control section sends the third process command or a command corresponding to the process command to the third communication means via the second communication means,
the second control section once holds a response to the command received via the third communication means, processes a first process request received via the fourth communication means, and sends additional information added to the first process request as the held response to the second communication means via the third communication means, when the processing of the first process request is completed, and
the first control section sends the additional information received via the second communication means to the output means.

5. The information processing apparatus according to claim 1, wherein the first communication means performs communication in a communication system which does not have any directivity, and
the fourth communication means performs communication in a communication system having the directivity or by a point-blank range.

6. An information processing apparatus comprising: a first device; and a second device connected to the first device in an attachable/detachable or fixed manner,
the first device comprising:
a communication section which communicates with an external communication terminal;
first communication means for detecting the communication of the communication section;
second communication means for communicating with the second device; and
a first control section which performs the communication section, the first communication means, the second communication means, and control of a process in the first device,
the second device comprising:
third communication means for communicating with the second communication means;
fourth communication means for communicating with the communication terminal via the communication section; and
a second control section which performs the third communication means, the fourth communication means, and control of a process in the second device.

7. The information processing apparatus according to claim 6, wherein in the first device, the communication section receives a first process request from the communication terminal,
the first communication means detects the reception, and the first control section sends a third process command to the third communication means via the second communication means,
in the second device, the second control section once holds a response to the third process command received via the third communication means,
the fourth communication means receives the first process request via the communication section,
the second control section processes the first process request received via the fourth communication means, and sends a second process request which is the held response to the second communication means via the third communication means in a case where a new process is required in processing the first process request, and
the first control section processes the second process request received via the second communication means, and sends the process response to the third communication means via the second communication means.

8. The information processing apparatus according to claim 6, wherein the first device comprises output means for outputting information,
in the first device, the communication section receives the first process request from the communication terminal,
the first communication means detects the reception, and the first control section sends a third process command to the third communication means via the second communication means,
in the second device, the second control section once holds a response to the third process command received via the third communication means,
the fourth communication means receives the first process request via the communication section,
the second control section processes the first process request received via the fourth communication means, and sends information produced as a result of the processing of the first process request as the held response to the second communication means via the third communication means, and
the first control section sends the information received via the second communication means to the output means.

9. The information processing apparatus according to claim 6, wherein the first device comprises output means for outputting information,
in the first device, the communication section receives a first process request from a communication terminal,
the first communication means detects the reception, and the first control section sends the third process command to the third communication means via the second communication means,
in the second device, the second control section once holds a response to the third process command received via the third communication means,
the fourth communication means receives the first process request via the communication section,
the second control section processes the first process request received via the fourth communication means, and sends additional information added to the first process request as the held response to the second communication means via the third communication means, when the processing of the first process request is completed, and
the first control section sends the additional information received via the second communication means to the output means.

10. The information processing apparatus according to claim 6, wherein the fourth communication means performs communication in a communication system having directivity or by a point-blank range.

11. The first device according to any one of claims 1 to 10.

12. The second device according to any one of claims 1 to 10.

13. A communication device which communicates with the information processing apparatus according to any one of claims 1 to 10, the communication device comprising:
fifth communication means for communicating with first communication means of the information processing apparatus; and
sixth communication means for communicating with fourth communication means of the information processing apparatus,
wherein the sixth communication means sends, to the fourth communication means, a first process request with respect to a second device of the information processing apparatus,
the fifth communication means sends, to the first communication means, a process command with respect to a first device of the information processing apparatus before sending the first process request, and
the process command is a process command to perform a process in cooperation with the processing of the first process request.

14. A communication device which communicates with an information processing apparatus comprising two or more communication means, the communication device comprising:
fifth communication means for communicating with first communication means of the information processing apparatus; and
sixth communication means for communicating with fourth communication means of the information processing apparatus,
wherein the sixth communication means sends, to the fourth communication means, a first process request with respect to the information processing apparatus, and
the fifth communication means sends, to the first communication means, a process command to perform a process in cooperation with the processing of the first process request before sending the first process request.
